# EUROPÄISCHE PATENTSCHRIFT

(11) **EP 1 520 120 B1**
(45) Veröffentlichungstag und Bekanntmachung des Hinweises auf die Patenterteilung: **16.01.2008**
(21) Anmeldenummer: 03762652.0
(22) Anmeldetag: 08.07.2003
(51) Int. Cl.: F16H 7/18

(54) **ZAHNRIEMENANTRIEB ZUM ANTRIEB DER NOCKENWELLE EINER BRENNKRAFTMASCHINE**
TOOTHED BELT DRIVE ELEMENT FOR ACTUATING THE CAMSHAFT OF AN INTERNAL COMBUSTION ENGINE
ELEMENT D'ENTRAINEMENT A COURROIE DENTEE SERVANT A ENTRAINER L'ARBRE A CAMES D'UN MOTEUR A COMBUSTION INTERNE

(30) Priorität: 09.07.2002 DE 10230739
(43) Veröffentlichungstag der Anmeldung: 06.04.2005
(73) Patentinhaber: Schaeffler KG, 91074 Herzogenaurach (DE)
(72) Erfinder: BOGNER, Michael, 90542 Eckental (DE); BONKOWSKY, Manfred, 30900 Wedemark (DE); BIESTER, Erik, 30163 Hannover (DE)
(74) Vertreter: Blaumeier, Jörg
(86) Internationale Anmeldenummer: PCT/EP2003/007293
(87) Internationale Veröffentlichungsnummer: WO 2004/005758

(56) Entgegenhaltungen:
- DE-A- 4 212 309
- DE-A- 10 014 325
- DE-A- 19 812 939
- DE-A- 19 913 288
- PATENT ABSTRACTS OF JAPAN Bd. 2000, Nr. 24, & JP 2001 187948 A (UNITA CO LTD), 10. Juli 2001 (2001-07-10)

## Beschreibung

### Gebiet der Erfindung

Die Erfindung betrifft einen Zahnriemenantrieb zum Antrieb der Nockenwelle einer Brennkraftmaschine, mit einer hydraulischen Spannvorrichtung für einen im Motor integrierten einseitig gezähnten Zahnriemen, wobei die Spannvorrichtung eine einseitig schwenkgelagerte Gleitschiene umfasst, die durch ein Stellglied gegen den Zahnriemen verspannbar ist, entsprechend dem Oberbegriff des Anspruchs 1.

In der Automobilindustrie geht der Trend zunehmend in die Richtung verbrauchsarmer Aggregate. Die Fahrzeuglebensdauer ist stark angestiegen, sodass gleiche Anforderungen auch für alle einzelnen Komponenten gelten. Für den Antrieb der Nockenwellen kommen derzeit entweder Steuerketten oder als Zahnriemen ausgebildete Steuerriemen zum Einsatz. Während die Steuerkette im Motor integriert im Ölnebel läuft, läuft bei den bisher gebauten Zahnriemenantrieben der Zahnriemen außerhalb des Motors und wird dort durch einen zusätzlichen Deckel (Cover) abgeschirmt. Der Vorteil einer verlustärmeren Kraftübertragung durch einen Zahnriemen wird somit durch die zusätzlichen Bauteile zur Abschirmung des Zahnriemens außerhalb des Motors wieder aufgehoben.

In der Offenlegungsschrift DE 34 34 328 A1 ist zwar bereits ein Steuerungsantrieb für Brennkraftmaschinen vorgeschlagen worden, bei der ein handelsüblicher Polyurethan-Zahnriemen mit beidseitiger Zähnung im Ölbad der Brennkraftmaschine läuft, also wie die Steuerketten im Motor integriert ist. Diese Druckschrift enthält aber keine Hinweise über die Ausbildung der Spannvorrichtung eines solchen beidseitig gezähnten Zahnriemens.

Aus der gattungsgemäßen DE-A-4212309 ist eine hydraulische Spannvorrichtung bekannt, mit der eine schwenkgelagerte Gleitschiene gegen einen Riemen gedrückt wird.

Eine Spannschiene für Kettenantriebe wird in der DE-A-19913288 beschrieben, bei der die Spannschiene aus einem Hohlprofil besteht, das mit einem Metallschaum ausgefüllt ist.

In der DE-A-10014325 wird vorgeschlagen, bei einer Spannschiene für einen Riementrieb eine Öffnung vorzusehen, die mit einem Vorsorgungskanal verbunden ist, über den ein Schmiermittel zugeführt wird.

### Zusammenfassung der Erfindung

Der Erfindung liegt die Aufgabe zugrunde, die genannten Nachteile der Nockenwellenantriebe mit im Motor integrierten Steuerketten und der Zahnriemenantriebe mit außerhalb des Motors angeordneten Zahnriemen zu vermeiden und einen Zahnriemenantrieb mit besonders geringer Reibung zwischen der Gleitschiene und dem Zahnriemen zu schaffen.

Zur Lösung dieser Aufgabe ist erfindungsgemäß ein Zahnriemenantrieb mit den Merkmalen des Anspruchs 1 vorgesehen.

Der Erfindung liegt dabei die Erkenntnis zugrunde, dass durch das Laufen des Zahnriemens im Ölnebel die an sich bestehende Schwierigkeit eines ungünstigen Gleitverhaltens zwischen dem meist aus Gummi bestehenden Riemen und der Gleitschiene aus Kunststoff zum großen Teil kompensiert wird, da ja in jedem Fall eine dünne Ölschicht auf dem Riemen sich ausbildet.

Zur Verkleinerung der Reibung zwischen dem Zahnriemen und der Gleitschiene der hydraulischen Spannvorrichtung ist dabei vorgesehen, dass die Gleitschiene mit, ein hydrodynamisches Aufschwimmen des Zahnriemens in ihr bewirkenden, mit einer Ölzuführeinrichtung verbundenen Bohrungen versehen ist, wobei diese Bohrungen direkt in der Anlagefläche der Gleitschiene am Zahnriemen angeordnet sind.

Durch diese erfindungsgemäße Ausgestaltung wird der nach wie vor bestehende relativ hohe Verschleiß am Riemenrücken infolge der vorhandenen Reibung praktisch vollständig beseitigt, da durch entsprechende Einstellung des Öldrucks und der Ölmenge ein echtes hydrodynamisches "Aufschwimmen" des Riemens in der Gleitschiene erreicht werden kann.

Dabei kann durch eine definierte geometrische Ausbildung der Gleitschienenoberfläche das hydrodynamische Aufschwimmen noch weiter begünstigt werden.

### Kurze Beschreibung der Zeichnungen

Weitere Vorteile und Einzelheiten der Erfindung ergeben sich aus der Beschreibung eines besonders geeigneten Ausführungsbeispiels zusammen mit den Figuren. Dabei zeigen:

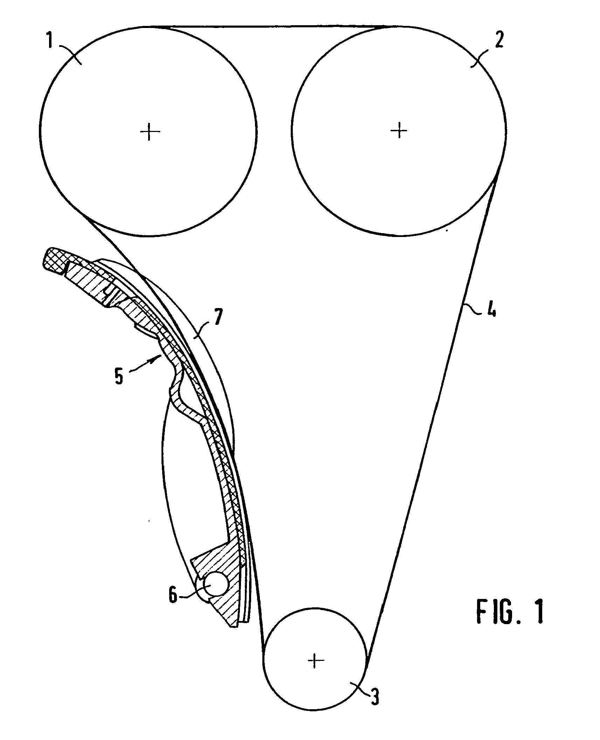

- Fig. 1: eine schematische Ansicht eines erfindungsgemäßen Zahnriemenantriebs im Motorblock, wobei der Motorblock selbst nicht mit dargestellt ist und
- Fig. 2: eine vergrößerte Schnittdarstellung der Gleitschiene der hydrodynamischen Spannvorrichtung zum Spannen des Zahnriemens.

### Detaillierte Beschreibung der Zeichnungen

Bei dem erfindungsgemäßen gesteuerten Antrieb einer Nockenwelle sind die Zahnriemenräder 1 bis 3 durch einen einseitig gezähnten Zahnriemen 4, beispielsweise aus Polyurethan, miteinander verbunden. Der Zahnriemen 4 läuft im Inneren des Motors im Ölbad, sodass er ständig in dem beim Betrieb des Motors entstehenden Ölnebel läuft. Zum Spannen des Zahnriemens 4 - die Einhaltung einer vorgegebenen Spannung ist für die Erzielung einer hohen Lebensdauer von entscheidender Bedeutung - dient erfindungsgemäß eine hydraulische Spannvorrichtung mit einer Gleitschiene 5, die im Bereich des einen Endes auf einer stationären Achse 6 drehgelagert ist und durch ein nicht gezeigtes, im Bereich des anderen Endes angreifendes, an sich bekanntes, Stellglied mit vorgegebener Andrückkraft an den Zahnriemen 4 andrückbar ist. Die gebogene Gleitschiene 5 ist mit beidseitig hochstehenden, in diesem Bereich einen U-förmigen Querschnitt der Gleitschiene ergebenden Führungs-Seitenwangen 7 versehen, die den Zahnriemen 4 seitlich flankieren, sodass er nicht von der Gleitschiene seitlich abgleiten kann.

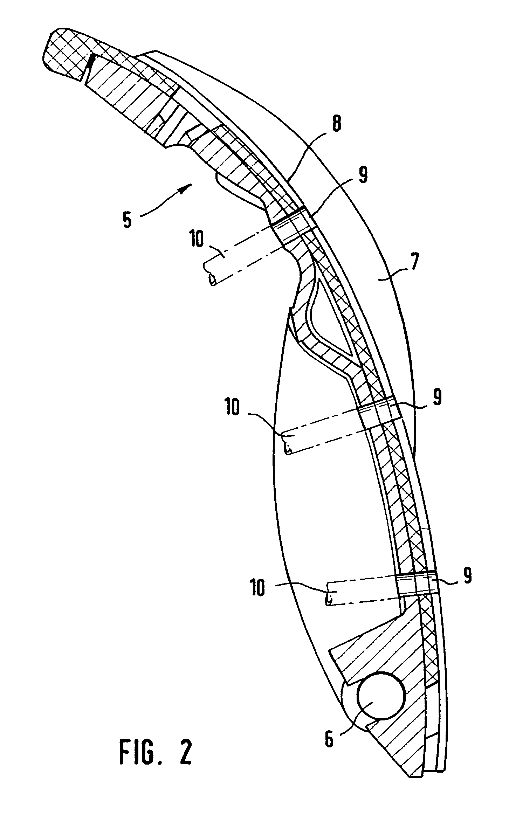

Die Gleitschiene ist mit einer Mehrzahl von die Anlagefläche 8 des Zahnriemens 4 durchsetzenden Bohrungen 9 versehen, die jeweils über nur schematisch in Fig. 2 angedeutete Rohre oder Schläuche 10 mit einer Ölzufuhreinrichtung verbunden sind, die gezielt Öl zwischen die Anlagefläche 8 und den Riemenrücken einpresst, sodass der Zahnriemen 4 hydrodynamisch auf der Gleitschiene 5 aufschwimmt. Dadurch ergibt sich nurmehr eine vernachlässigbare minimale Reibung, sodass nicht nur die daraus resultierenden Reibungsverluste des Zahnriemenantriebs entfallen, sondern insbesondere die Abnutzung des Zahnriemens durch die darauf reibende Gleitschiene wodurch die Lebensdauer eines solchen Zahnriemenantriebs erheblich erhöht werden kann.

### Bezugszeichenliste

- 1: Zahnriemenrad
- 2: Zahnriemenrad
- 3: Zahnriemenrad
- 4: Zahnriemen
- 5: Gleitschiene
- 6: stationäre Achse
- 7: Führungs-Seitenwagen
- 8: Anlagefläche
- 9: Bohrungen
- 10: Rohr/Schlauch

## Patentansprüche

1. Zahnriemenantrieb zum Antrieb der Nockenwelle einer Brennkraftmaschine, mit einer hydraulischen Spannvorrichtung für einen im Motor integrierten einseitig gezähnten Zahnriemen (4), wobei die Spannvorrichtung eine einseitig schwenkgelagerte Gleitschiene (5) umfasst, die durch ein Stellglied gegen den Zahnriemen (4) verspannbar ist, wobei die Gleitschiene (5) eine Anlagefläche (9) aufweist **dadurch gekennzeichnet, dass** die Anlagefläche (8) der Gleitschiene (5) eine Mehrzahl von in Längsrichtung voneinander beabstandeten, mit einer Ölzufuhreinrichtung verbundenen Bohrungen (9) aufweist, durch die gezielt Öl zwischen die Anlagefläche (8) und den Rücken des Zahnriemens (4) einpressbar ist, um ein hydrodynamisches Aufschwimmen des Zahnriemens (4) auf der Gleitschiene (5) zu bewirken.

2. Zahnriemenantrieb nach Anspruch 1, **dadurch gekennzeichnet, dass** die Bohrungen (9) jeweils über Rohre oder Schläuche (10) mit der Ölzufuhreinrichtung verbunden sind.

3. Zahnriemenantrieb nach einem der vorangehenden Ansprüche, **dadurch gekennzeichnet, dass** die Gleitschiene (5) beidseitig hoch stehende, einen U-förmigen Querschnitt ergebende Führungs-Seitenwangen (7) aufweist.

## Claims

1. Toothed belt drive for driving the camshaft of an internal combustion engine, having a hydraulic tensioning device for a toothed belt (4) toothed on one side and incorporated into a motor, wherein the tensioning device comprises a slide rail (5) which is pivotably mounted on one side and which may be braced against the toothed belt (4) by an actuator, the slide rail (5) having a contact face (8), **characterised in that** the contact face (8) of the slide rail (5) has a plurality of bores (9) spaced apart in the longitudinal direction and connected to an oil supply device, through which bores oil may be injected between the contact face (8) and the back of the toothed belt (4) in order to effect hydrodynamic floating of the toothed belt (4) on the slide rail (5).

2. Toothed belt drive according to claim 1, **characterised in that** the bores (9) are each connected to the oil supply device via tubes or hoses (10).

3. Toothed belt drive according to one of the preceding claims, **characterised in that** the slide rail (5) has guide side cheeks (7) raised on both sides and producing a U-shaped cross-section.

## Revendications

1. Système d'entraînement à courroie dentée pour l'entraînement de l'arbre à cames d'un moteur à combustion interne, comportant un dispositif de serrage hydraulique pour une courroie dentée (4), dentée sur un seul côté, intégrée dans le moteur, le dispositif de serrage comportant un rail tendeur (5) monté sur un côté de manière pivotante, lequel peut être bloqué contre la courroie dentée (4) par l'intermédiaire d'un organe de réglage, le rail tendeur (5) comportant une surface de contact (8), **caractérisé en ce que** la surface de contact (8) du rail tendeur (5) comporte une pluralité de forures (9), écartées les unes des autres dans le sens longitudinal, lesquelles sont reliées à un dispositif d'alimentation en huile et à travers lesquelles l'huile peut être poussée de manière ciblée entre la surface de contact (8) et le dos de la courroie dentée (4), pour induire un flottement hydrodynamique de la courroie dentée (4) sur le rail tendeur (5).

2. Système d'entraînement à courroie dentée selon la revendication 1, **caractérisé en ce que** les forures (9) sont reliées chacune par l'intermédiaire de tubes ou tuyaux flexibles (10) au dispositif d'alimentation en huile.

3. Système d'entraînement à courroie dentée selon l'une quelconque des revendications précédentes, **caractérisé en ce que** le rail tendeur (5) comporte des joues latérales de guidage (7), orientées verticalement sur les deux côtés et engendrant une section en forme de U.
